Europäisches Patentamt

European Patent Office

Office européen des brevets

(19)

(11) Numéro de publication: **0 206 960**
**A1**

# (12) DEMANDE DE BREVET EUROPEEN

(21) Numéro de dépôt: 86430007.4

(22) Date de dépôt: 28.03.86

(51) Int. Cl.⁴: **F16B 12/24**

(30) Priorité: 02.04.85

(43) Date de publication de la demande:
30.12.86 Bulletin 86/52

(84) Etats contractants désignés:
BE CH DE GB IT LI NL

(71) Demandeur: Kapikian, Jean Claude
Chemin St Martin "La Calade"
F-13090 Aix en Provence(FR)
Demandeur: Kapikian, Robert
Chemin St Martin "La Calade"
F-13090 Aix en Provence(FR)

(72) Inventeur: Kapikian, Jean Claude
Chemin St Martin "La Calade"
F-13090 Aix en Provence(FR)
Inventeur: Kapikian, Robert
Chemin St Martin "La Calade"
F-13090 Aix en Provence(FR)

(54) Système d'assemblage et de solidarisation entre eux d'éléments de structures au moyen d'une pièce de jonction.

(57) L'invention est relative à un système d'assemblage entre eux d'éléments de structure constitués par des traverses et/ou tablettes et/ou panneaux, au moyen d'une pièce de jonction, permettant la réalisation d'ensembles modulaires, préférentiellement en bois, aisément montables et démontables.

Les pièces de jonction (5) et les embouts des éléments de structure sont usinés de manière à constituer un ensemble de grosse languette (6) terminée par une petite languette (8) qui s'encastre dans les rainures usinées dans l'autre constituant de l'assemblage (B). Le dimensionnement des languettes et rainures ainsi que les angles que font les joues des languettes et des rainures avec le plan médian des rainures sont choisis pour obtenir, par simple encastrement, une bonne solidarisation des éléments de structure et des pièces de jonction.

Figure 3

EP 0 206 960 A1

La présente invention concerne un système d'assemblage entre eux d'éléments de structures, tels que traverses et/ou tablettes et/ou panneaux, au moyen d'une pièce de jonction, permettant la réalisation d'ensembles modulaires, préférentiellement en bois, aisément montables et démontables.

Il existe de nombreux dispositifs pour l'assemblage d'éléments de structure tels que traverses, tablettes ou panneaux au moyen de pièces de raccordement, permettant la réalisation d'ensembles modulaires démontables. La plupart de ces systèmes comportent des pièces mécaniques qui assurent la solidarisation éléments de structure-pièces de jonction et donc la cohésion de l'ensemble modulaire réalisé avec ces éléments. Mais ces dispositifs sont coûteux, peu esthétiques si certains pièces mécaniques apparaissent à la vue, et nécessitent l'emploi d'outillage pour le montage et le démontage. Certains systèmes d'assemblage comportent des tourillons ou des emboitements à mi-bois ou l'ensemble des deux. Mais la cohésion d'un tel montage est en général assez médiocre. Ainsi le brevet 1.432.133 revendique l'assemblage de panneaux par leur bord, grâce à un bouvetage situé sur le bord du panneau et une partie avançante du genre dit à mi bois, portant un autre bouvetage orienté de façon différente au premier bouvetage, et une pièce centrale qui permet, en la faisant glisser, de bloquer ou de dégager les panneaux. Si un tel système permet une bonne solidarisation entre les panneaux, il présente, par contre, divers inconvénients tels que : mauvaise rigidité de l'assemblage, usinage important en particulier sur toute la surface des divers panneaux à assembler et nécessite d'assembler obligatoirement 4 panneaux.

D'autres dispositifs sont basés sur le simple emboitement des embouts des éléments de structure sur une pièce de jonction rainurée en conséquence. C'est, usuellement, une rainure en forme de U dans laquelle s'insère un embout d'élément de structure. La solidarisation des pièces est souvent réalisée par chevillage ou collage. Ainsi, dans le brevet belge 750716, axé sur la construction de bungalows, chalets..., l'ossature en bois est constituée d'éléments polygonaux qui présentent, sur une ou plusieurs de leurs faces, une rainure s'étendant sur toute la longueur de l'élément parallèlement à l'axe longitudinal de ce dernier, dans laquelle est inséré l'élément de remplissage. La solidarisation des diverses pièces est réalisée au moyen de tenons, trous et chevilles ou par collage. Un tel dispositif implique, dans le cas des trous et chevilles, la nécessité, outre la mise en place des diverses pièces de l'assemblage, de percer des trous et d'introduire des chevilles ou bien de coller des diverses surfaces en contact. L'assemblage est, de ce fait, difficilement ou pas du tout démontable.

Cer dernier inconvénient se retrouve également dans le cas du dispositif d'assemblage revendiqué dans le brevet anglais 910,953 qui par contre a été conçu pour assurer à la fois un bon maintien de la colle sur les surfaces à coller ainsi qu'une augmentation de ces surfaces, grâce à la présence sur les pièces à assembler, de saillies s'encastrant exactement dans les creux de l'autre pièce, sans en chasser la colle et permet donc une bonne tenue mécanique de l'assemblage ainsi collé.

Pour réaliser des assemblages aisément démontables, on utilise souvent un emmanchement "à force" d'un embout d'élément de structure dans une rainure en forme de U d'une pièce de jonction. C'est le serrage de cet embout par les lèvres de la rainure qui assure la solidarisation élément de structure-pièce de jonction. Les différences entre ces divers systèmes portent sur la conception de la pièce de jonction, sa forme, la nature de son matériau et particulièrement sur les moyens propres à assurer une bonne solidarisation élément de structure-pièce de jonction.

Ainsi le brevet 2.325.840 revendique un dispositif comportant une pièce de jonction de forme parallélépipédique, rainurée sur ses angles et sur les quatre faces longitudinalement jusqu'à mi distance du centre, et un plateau faisant usage de fond et disposant de quatre bossages qui pénètrent dans les rainures de côté de la pièce. Ces bossages étant de dimension supérieure aux largeurs des rainures, le serrage par une vis entraine la déformation de la pièce et ainsi la possibilité de pincer les panneaux sur les rainures des angles. Suivant l'invention, la pièce de jonction est réalisée préférentiellement en matière plastique, matériau plus aisément déformable que tout métal susceptible d'être utilisé pour la réalisation du plateau de fond avec ses quatre bossages qui doivent être glissés à force, dans les quatre rainures correspondantes de la pièce de jonction. En effet, seul un métal est susceptible d'éviter l'écartement des bossages et la rupture de ceux ci, d'autant plus que la cohésion de l'ensemble sera d'autant meilleure que l'épaisseur des bossages sera plus grande que la largeur des rainures. L'emploi du bois pour la réalisation du plateau avec bossages semble donc totalement exclue. De plus, la longueur des bossages étant obligatoirement faible, c'est seulement aux deux extrémités de chaque embout des éléments de structure que se fera réellement la solidarisation avec la pièce de jonction.

Le brevet 2.045.609 revendique l'emploi d'une pièce comprenant quatre lèvres servant à assembler en les pinçant quatre panneaux à 90°. Bien que le brevet ne l'explicite pas, il apparait que ces pièces doivent obligatoirement être réalisées en matériaux métalliques ou plastiques. En effet, comme dans le cas du brevet 2.325.840 la bonne solidarisation avec la pièce de jonction nécessite d'une part que l'épaisseur de l'embout des éléments de structure soit supérieure à la largeur de la rainure, et d'autre part, un glissement "à force" important pour l'insertion de l'extrémité des éléments de structure dans les rainures sur une profondeur relativement élevée. La conjonction de ces deux conditions nécessite le choix d'un matériau métallique ou éventuellement plastique alliant à la fois tenue mécanique et élasticité élevée. Le bois ne saurait satisfaire à ces conditions. De plus, ce système ne permet de réaliser que des montages d'une qualité esthétique médiocre, car les pièces de jonction s'intègrent mal à l'harmonie d'un ensemble monté.

Dans le brevet 2.187.044 la pièce de jonction est de forme générale parallélépipédique, présentant, sur quatre de ses faces, quatre rainure parallèles de section en U dans lesquelles sont encastrées les extrémités des rayons horizontaux ou verticaux servant à compartimenter les rayonnages et, au niveau de ses quatre arêtes délimitant les faces sur lesquelles sont pratiquées les rainures, quatre encoches, de forme parallélépipédique et transversales aux rainures précitées, sont encastrés les bords de panneaux formant un fond pour le rayonnage. Dans ce brevet, il semble que c'est la présence de rainures transversales dans lesquelles sont encastrés les angles des panneaux de fond qui donnent à un ensemble monté une cohésion et une stabilité suffisante. A défaut de panneaux de fond encastrés, la solidarisation des rayons horizontaux ou verticaux serait insuffisante pour de nombreux montages.

Le brevet 2.326.654 revendique des éléments de liaison modulaires comprenant des éléments de liaison en forme de parallélépipèdes rectangles avec des fentes d'assemblage disposées en croix et des éléments de support constitués par des planches présentant à leurs extrémités des rainures longitudinales et/ou transversales coopérant avec les fentes d'assemblage. Les éléments de jonction sont, dans ce cas, constitués par deux pièces différentes s'emboîtant elles-mêmes en force. La cohésion d'un ensemble est donc fonction d'une part de la solidarisation éléments de supports-bords de panneaux et d'autre part éléments de liaison-éléments de support. Ce dispositif d'assemblage est coûteux, compliqué, de mise en oeuvre délicate et ne permettant qu'une médiocre cohésion mécanique.

Pour améliorer la cohésion mécanique on peut utiliser la technique usuelle des solidarisations par queue d'aronde. Le brevet allemand 30.47.532.2 revendique un système de ce type. Des pièces d'assemblage ayant la forme de profils comportant 2 à 4 ailes dont chacune est fraisée en forme de partie mâle de queues d'aronde sont glissées dans des rainures ayant la forme femelle de queues d'aronde usinées sur les chants des pièces à assembler. S'il permet d'éviter le déboitement de l'assemblage, par contre, ce système présente de nombreux inconvénients. Du fait que la pièce de liaison doit être insérée par glissement sur toute la longueur des chants des diverses pièces qu'elle doit assembler et que, de ce fait, il y a de multiples surfaces qui se serrent les unes contre les autres, engendrant la rigidité de l'ensemble monté, il est nécessaire, pour obtenir une rigidité suffisante de l'assemblage, que l'usinage soit réalisé avec une très grande précision. Tout jeu facilitant le glissement diminuera la rigidité de l'assemblage. Inversement, un jeu insuffisant aura pour effet de rendre difficile sinon impossible l'insertion par glissement de la pièce de liaison, surtout si les éléments à assembler sont en bois massif, matériau sensible aux conditions atmosphériques. De plus, du fait de la présence de nombreux angles aigus aussi bien sur les pièces à assembler que sur les pièces de liaison, qui constituent autant d'amorces de rupture, les risques de cassures et/ou d'arrachement sont importants. Les extrémités des parties pointues dont l'existence est spécifique à ce type d'assemblage à queue d'aronde, sont particulièrement fragiles, et susceptibles de détériorations aussi bien lors des manutentions, que du montage ou du démontage.

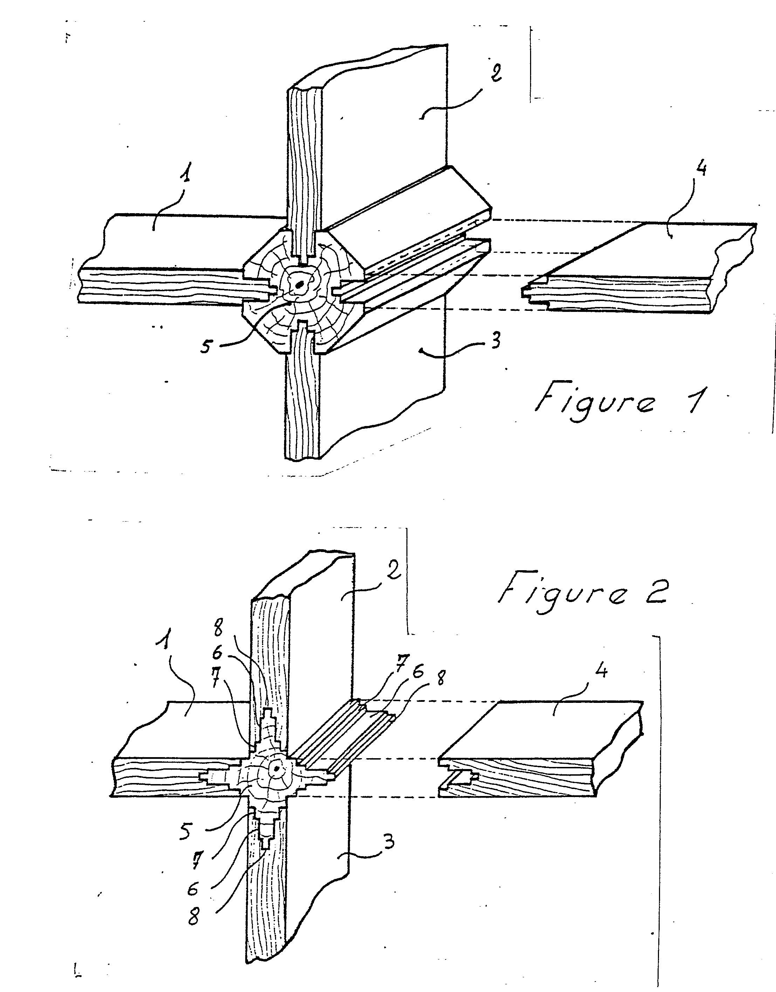

Les autres systèmes connus ne permettent pas de remplir l'ensemble des conditions nécessaires pour la réalisation d'un système d'assemblage satisfaisant et notamment bonne solidarisation des pièces de structure avec la pièce de jonction, forte cohésion et grande rigidité d'un ensemble monté, grande qualité esthétique, obtenue en particulier en utilisant du bois aussi bien pour les éléments de structure que pour les pièces de jonction et en donnant à celles ci une forme s'intégrant bien à l'harmonie d'un ensemble monté, grâce en particulier à la compacité des pièces de jonction, ainsi qu'un faible prix de revient. C'est pourquoi, les demandeurs ont étudié et mis au point un système d'assemblage entre eux d'éléments de structure tels que traverses et/ou de tablettes et/ou panneaux (Fig 1 -Fig 2 : 1-2-3-4), au moyen d'une pièce de jonction (5) permettant la réalisation d'ensembles modulaires préférentiellement en bois, aisément montables et démontables caractérisé en ce que soit l'embout de chaque élément de structure, soit chaque pièce de jonction représentés en A sur la figure 3 Annexe 2, comporte une grosse languette (6) comportant un ou plusieurs étages d'épaisseurs décroissantes et dont l'extrémité constitue une petite languette terminale (8-8') qui, s'encastrant dans les rainures usinées dans l'autre élément (B) de l'assemblage permet la solidarisation des éléments de structure et de la pièce de jonction grâce au fait que l'épaisseur (1) de l'extrémité de la petite languette (8-8') de la pièce A est légèrement supérieure à la largeur (1') du fond de la petite rainure de la pièce B et que la distance (L') entre les lèvres des bords de la grosse rainure de la pièce B est légèrement inférieure à l'épaisseur (L) de la partie correspondante de la grosse languette de la pièce A, et au fait que la profondeur (a' + b') de l'ensemble des rainures est sensiblement égale à la longueur (a + b) de l'ensemble des languettes ainsi qu'au fait que les joues des languettes et des rainures sont usinées de manière à avoir des angles bien déterminés respectivement $(\alpha, \beta)$ et $(\alpha', \beta')$ entre les plans - (7,7') et (8,8') des joues des languettes et les plans (9,9') et (10,10') des joues des rainures par rapport au plan médian de l'emboitement (X,X').

Le système d'assemblage d'éléments de structure entre eux, au moyen d'une pièce de jonction, conformément à la présente invention, permet de monter, par simple emboitement, des éléments modulaires ayant une excellente cohésion par suite de la bonne solidarisation obtenue entre chacun des éléments de structure et la pièce de jonction correspondante. Le démontage et la récupération pour une autre utilisation des divers éléments d'un montage sont particulièrement aisés puisque l'utilisation de colle n'est pas nécessaire, et que la profondeur de l'insertion en force est faible.

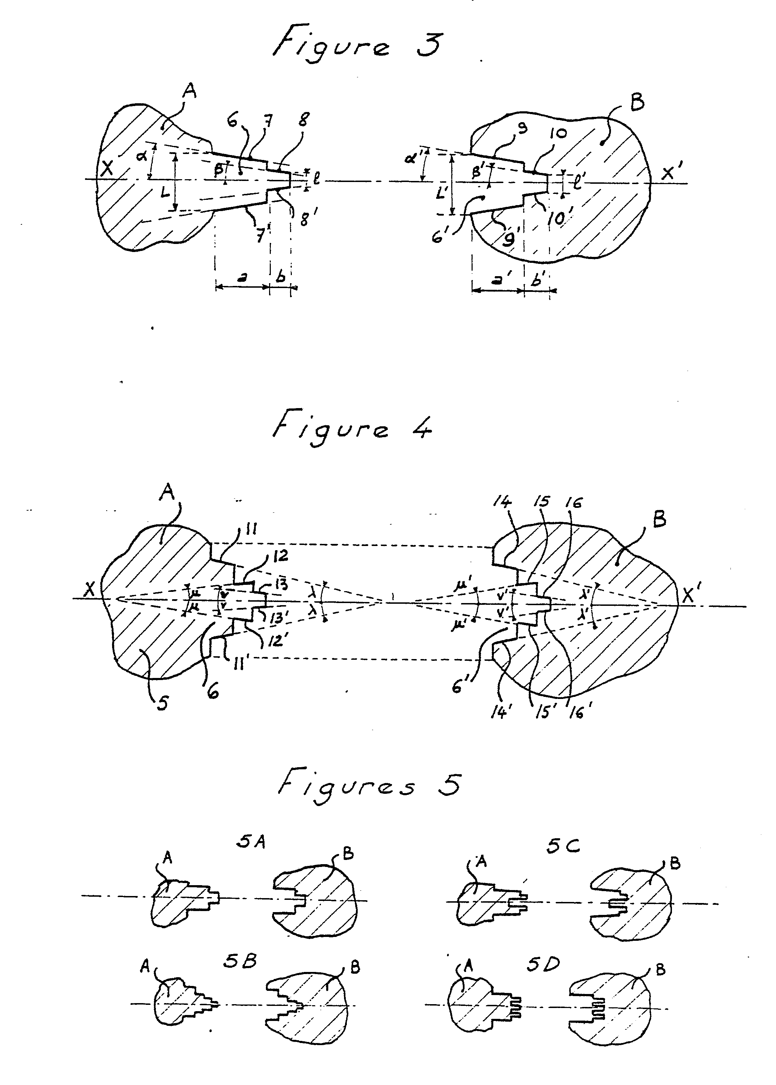

Les figures 1 et 2 en annexe 1 représentent deux exemples de mode de réalisation du système d'assemblage faisant l'objet de la présente invention. Chaque figure représente en coupe-perspective un assemblage de trois éléments de structure - (1,2 et 3) et d'une pièce de jonction (5). Un quatrième élément de structure (4) est représenté avant son insertion dans la pièce de jonction. Dans la variante de mode de réalisation du système d'assemblage suivant l'invention représentée dans la figure 1, ce sont les embouts des éléments de structure qui sont façonnés de manière à avoir une grosse languette (6) dont l'extrémité constitue une petite languette qui s'encastrent dans les rainures usinées sur les quatre faces de la pièce de jonction. Dans cet exemple, la grosse languette ne comporte qu'un seul étage. Dans un autre exemple de réalisation non limitatif des possibilités suivant l'invention représenté en annexe 1 figure 2 et dont l'encadrement est détaillé en annexe 2 figure 4, la pièce de jonction qui est usinée de manière à constituer des ailes profilées (6) dont chacune comporte une grosse languette à 2 étages (11-11') et (12-12') terminée par une petite languette (13-13') qui s'emboitent dans la rainure 6' usinée dans l'embout des éléments de structure (1-2-3 et 4) limitée par les plans (14-14'), (15-15') et (16-16') symétriques par rapport au plan médian XX'. Les longueurs des faces (11-11'), (12-12') et (13-13') des languettes sont respectivement égales à celles des faces (14-14'), (15-15') et (16-16') des rainures. Les distances entre les plans des languettes 11 et 11', entre 12 et 12' et entre 13 et 13' sont respectivement légèrement supérieures à celles qui séparent les plans 14 et 14', 15 et 15', 16 et 16' des rainures. Les plans 11 et 11', 12 et 12', 13 et 13', 14 et 14', 15 et 15', 16 et 16' font respectivement des angles $\lambda$, $\mu$, $\nu$, $\lambda'$, $\mu'$, $\nu'$ avec le plan médian XX'. La contrepente observée dans cet exemple, pour les plans 12/12' et 15/15' par rapport aux plans 11/11', 13/13', 14/14' et 16/16' améliore la solidarisation de l'élément de structure et de la pièce de jonction établie lors de l'emboitement et, par voie de conséquence, nécessite la mise en oeuvre d'un effort accru pour la désolidarisation de ces deux pièces.

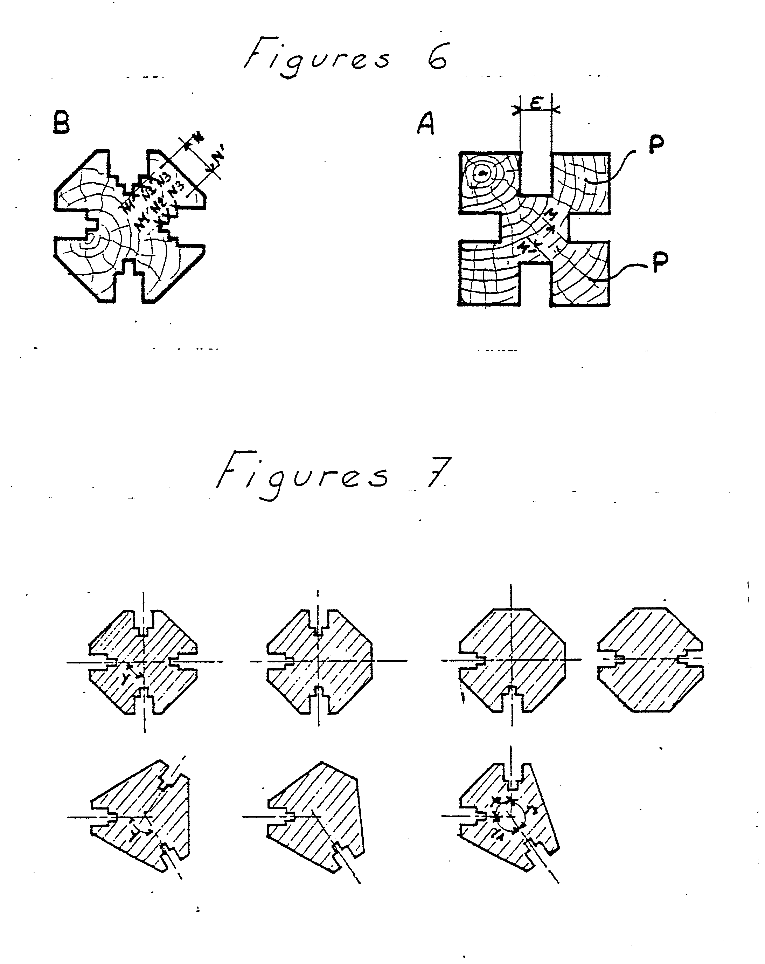

Le nombre d'étages de la grosse languette est normalement fonction de l'épaisseur des éléments de structure, de la nature des matériaux utilisés et de la facilité d'usinage pour la confection des pièces de jonction et des éléments de structure. Les rainures sont usinées de mainère à épouser, compte tenu de l'élasticité du matériau, les formes des diverses languettes (voir figures 5A et 5B en annexe 2).

La bonne solidarisation des traverses et de la pièce de jonction est obtenue en dimensionnant la grosse languette, la petite languette, la grosse rainure et la petite rainure ainsi que les différents angles que font les plans des languettes et des rainures avec le plan de symétrie X'X (fig 3) de manière à ce que compte tenu de l'élasticité des matériaux employés, l'emboitement des éléments de structure dans les pièces de jonction soit aisé tout en assurant un serrage satisfaisant après encastrement. Pour cela, les épaisseurs (L') et (l') seront légèrement inférieures aux épaisseurs (L) et (l), les différences (L-L') et (l-l') seront fonction de la nature des matériaux employés. Il en est de même pour le choix des angles $\alpha$, $\alpha'$, $\beta$ et $\beta'$. En fonction de la nature des matériaux utilisés pour les traverses et pour la pièce de jonction, on adoptera pour chacun des angles $\alpha$, $\alpha'$, $\beta$ et $\beta'$, une valeur propre à chacun d'aux et choisie entre 0 et 20 degrés. $\alpha$ et $\beta'$ auront préférentiellement des valeurs comprises entre 1 et 3 degrés tandis que chacun des angles $\beta$ et $\alpha'$ variera préférentiellement entre 0 et 3 degrés.

La solidarisation éléments de structure-pièce de jonction est encore accrue en usinant l'extrémité de la petite languette terminale de manière à constituer de petites languettes qui s'encastreront dans l'extrémité, usinée en conséquence, de la petite rainure. Les figures (5C) et (5D) représentent divers exemples de réalisation non limitatifs des possibilités suivant la présente invention.

Le système d'assemblage selon l'invention présente l'avantage que les éléments de structure ainsi que les pièces de jonction peuvent être réalisées toutes deux en bois. Mais d'autres matériaux sont également utilisables tels que matières plastiques ou métal ... Un même matériau ou des matériaux différents peuvent être utilisés pour la confection des éléments de structure et des pièces de jonction. Pour un matériau déterminé des éléments de structure, le choix du matériau des pièces de jonction sera fonction des caractéristiques mécaniques et notamment des propriétés d'élasticité d'une part du matériau des éléments de structure, et, d'autre part, du matériau envisagé pour les pièces de jonction. Ce choix conditionne également le dimensionnement des languettes et rainures car une bonne solidarisation éléments de structure-pièce de jonction nécessite que les surfaces des rainures et des languettes qui sont en contact après emboitement soient suffisantes.

Dans le mode de réalisation de l'invention représenté sur la figure 1 dans lequel ce sont les embouts des éléments de structure qui comportent les languettes qui s'encastrent dans les rainures de la pièce de jonction, il est nécessaire que les distances $N_1N_1'$-$N_2N_2'$-$N_3N_3'$ (figure 6) soient supérieures à la distance NN' qui est la longueur minimum en dessous de laquelle il y a risque de rupture. Ces distances sont à raprocher de la distance MM' (figure 6) qui dans le cas d'une pièce de jonction réalisée suivant les méthodes usuelles et comportant des rainures simples, conditionne le risque de rupture d'une branche P. Il est évidemment nécessaire que MM' soit également supérieure à NN'. De ce fait l'on constate que le système suivant l'invention permet de diminuer fortement le volume de matière utilisée pour la confection de la pièce de jonction. Suivant la forme donnée à la pièce de jonction, l'économie peut s'élever jusqu'à 50%. Il est également possible de combiner économie de matière et diminution des risques de rupture de la pièce.

Suivant le même mode de réalisation de l'invention représenté à la figure 1, le nombre de rainures des pièces de jonction peut être variable, en fonction des montages envisagés. Il en est de même pour les angles que font entre eux les plans de médians des différentes rainures. Les figures 7 montrent divers exemples de réalisation non limitatifs de la portée de l'invention dans lesquels varient le nombre de rainures ainsi que les angles "y" que font entre eux les plans médians des rainures.

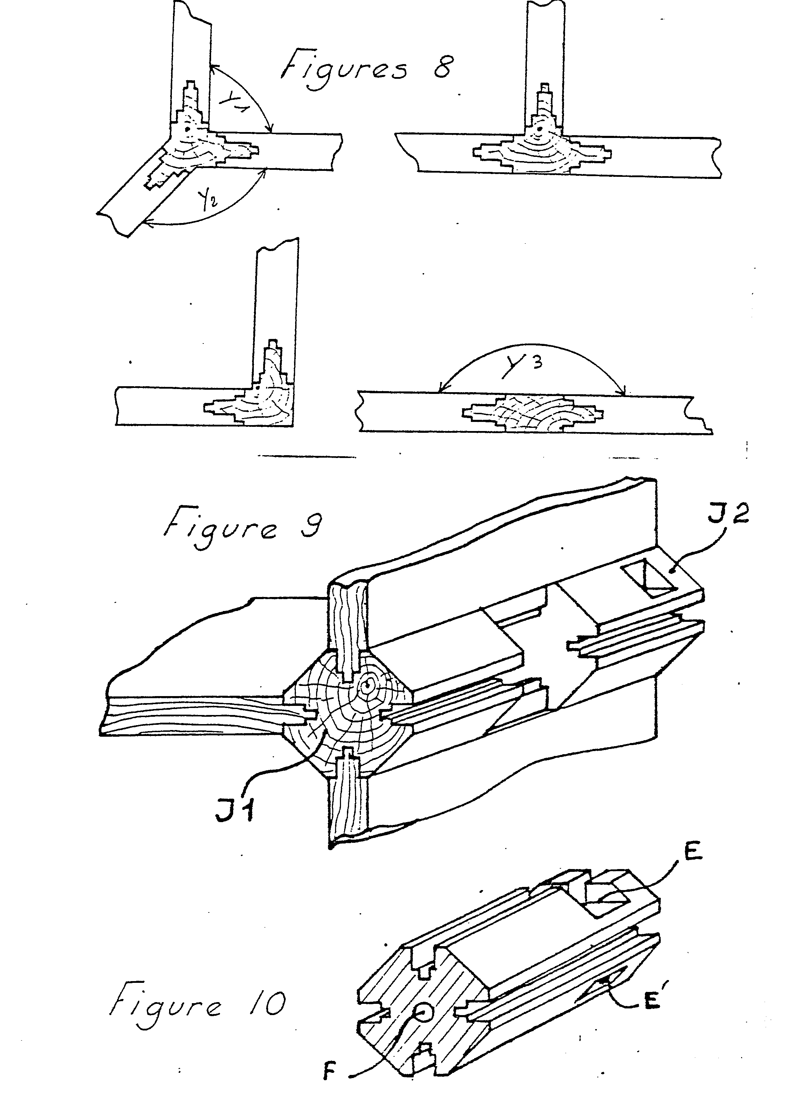

De même, dans le cas du mode de réalisation représenté à la figure 2, le nombre d'ailes profilées des pièces de jonction peut être variable, en fonction des montages envisagés. Il en est de même pour les angles que font entre eux les plans de médians des différentes rainures. Les figures 8 en Annexe 3 montrent divers exemples de réalisation non limitatifs de la portée de l'invention dans lesquels varient le nombre d'ailes profilées ainsi que les angles (y) que font entre eux les plans médians des ailes profilées.

Les éléments de structure, tels que traverses et/ou panneaux et/ou tablettes à assembler pour la réalisation d'un montage déterminé peuvent avoir des longueurs variables au niveau du raccordement avec la pièce de jonction. Suivant les cas, il peut être avantageux d'utiliser plusiers pièces de jonction échelonnées sur la longueur des embouts des éléments de structure ou, inversement, d'emboiter les extrémités de plusieurs éléments de structure sur une même aile profilée de la pièce de jonction.

La figure 9 représente un exemple de réalisation dans lequel l'assemblage de deux éléments de structure est réalisé au moyen de deux pièces de jonction J 1 et J 2.

Dans le mode de réalisation de l'invention tel que représenté en figure 1, il peut être commode d'utiliser des pièces de jonction homogènes pour réaliser un montage particulier. De ce fait, une ou plusieurs rainures de certaines pièces de jonction peuvent ne pas être occupées par les languettes des éléments de structure. Dans ce cas, la mise en place de cache-rainures usinés comme l'extrémité des traverses, et, de ce fait, s'emboitant exactement dans les rainures améliore à la fois l'esthétique de l'ensemble du montage et la solidarisation éléments de structure-pièce de jonction. La figure 13 en annexe 4 représente un exemple de réalisation non limitatif des possibilités suivant l'invention.

Avec ce même mode de réalisation représenté en figure 1, les pièces de jonction peuvent en sus des rainures réalisées suivant l'invention comporter des usinages complémentaires tels que encoches transversales permettant la mise en place par exemple de panneaux de fond, ou trous pour la fixation d'éléments de portes ou de caches des extrémités des pièces de jonction. Dans ce cas, il peut être avantageux de remplacer une pièce de jonction unique par plusieurs pièces de jonction juxtaposées ou non, dont certaines comporteraient des usinages complémentaires. La figure 10 représente une pièce de jonction comportant une encoche E et une encoche E' d'un autre type, dans lesquelles peuvent être insérés des panneaux constituant par exemple un fond pour le montage réalisé, ainsi qu'un trou F utilisable par exemple pour une fixation murale.

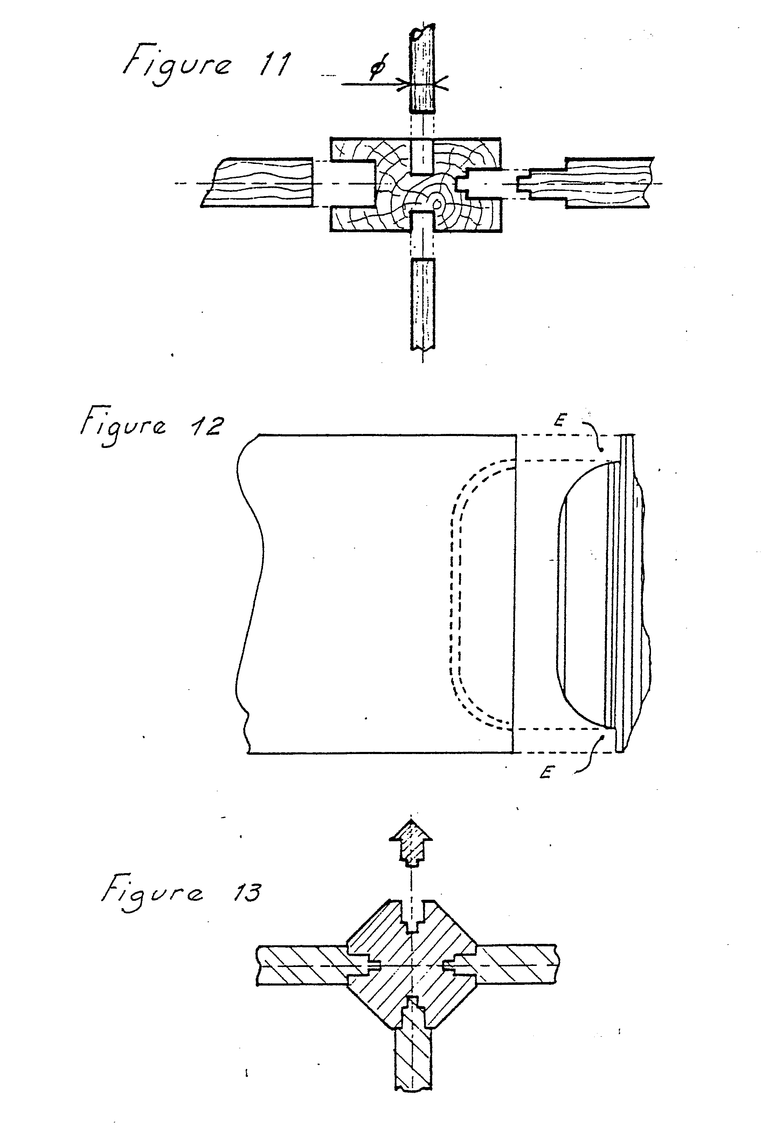

Les pièces de jonction peuvent comporter des perçages et/ou des rainures ayant des formes variables mais au moins l'une des rainures est réalisée suivant la présente invention. La figure 11 représente une telle pièce de jonction comportant des rainures de trois types différents et un perçage permettant l'insertion de tubes ou de tourillons. De même, dans le cas du mode de réalisation de l'invention tel que représenté dans la figure 2, les éléments de structure, en sus des rainures réalisées suivant l'invention, peuvent comporter des usinages complémentaires tels que encoches longitudinales permettant par exemple une mise en place de panneaux de fond facilitée par le fait que l'angle de raccordement de deux éléments de structure contigus se fait suivant un angle vif. Avec ce mode de réalisation, les éléments de structure et la pièce de jonction peuvent être insérés de manière à ce que les languettes et les rainures n'apparaissent pas à la vue. Il suffit pour cela que les rainures des éléments de structure ainsi que les languettes des pièces de jonction soient interrompues aux extrémités (E), comme le montre la figure 12 en annexe 5. Cette disposition améliore encore l'esthétique d'un ensemble monté. Cet avantage combiné au fait que deux éléments de structure voisins se raccordent en créant un angle vif, permet la réalisation d'ensembles montés particulièrement esthétiques tels que bibliothèques.

Les pièces de jonction peuvent comporter simultanément des ailes profilées et des rainures ayant des formes variables mais au moins l'une des ailes ou l'une des rainures est réalisée suivant la présente invention. Les embouts des éléments de structure se raccordant à une telle pièce de jonction sont usinées pour s'adapter à l'aile profilée ou à la rainure correspondante.

La réalisation d'assemblages entre eux d'éléments de structure tels que traverses et/ou tablettes et/ou panneaux au moyen d'une pièce de jonction, permettant la réalisation d'ensembles modulaires aisément montables et démontables, préférentiellement en bois, conformément à notre invention permet de réaliser des ensembles rigides et de grande cohésion, même en l'absence de panneaux de fond, du fait de la bonne solidarisation des éléments de structure avec la pièce de jonction obtenue grâce à un profilage des ailes et des rainures qui permet, outre une importante surface de contact, un autoserrage des pièces entre elles par un dimensionnement et un choix approprié des angles pour les languettes et les rainures. Le montage et le démontage sont particulièrement aisés car la profondeur de l'emboitement "à force" est faible. Le choix du mode de réalisation des assemblages conformément à l'invention (Figure 1 et 2) est fonction de la nature des ensembles modulaires à réaliser. Dans certains cas, il sera préférable d'utiliser des pièces de jonction du type représenté à la figure 1. Dans d'autres cas et notamment si l'on désire avoir des angles vifs entre les pièces de structure, un mode de réalisation suivant la figure 2 sera préférable. Le prix de revient est bas, car il ne nécessite que l'usinage, aisé, des embouts des éléments de structure et des pièces de jonction. De plus, l'économie de matériau et notamment de bois, dans le cas de la réalisation d'un montage avec ce matériau, est importante pour la réalisation des pièces de jonction. Enfin, un montage réalisé en utilisant des assemblages suivant l'invention est particulièrement esthétique grâce à la compacité des pièces de jonction et à la possibilité d'utiliser un même matériau noble, tel que le bois, pour la réalisation des éléments de structure et pour les pièces de jonction.

## Revendications

1-Système d'assemblage entre eux d'éléments de structure tels que traverses et/ou tablettes et/ou panneaux (1-2-3-4 figures 1 et 2) au moyen d'une pièce de jonction (5) permettant la réalisation d'ensembles modulaires préférentiellement en bois, aisément montables et démontables, caractérisé en ce que soit l'embout de chaque élément de structure soit chaque pièce de jonction (A-figure 3) comporte une gross languette (6) façonnée avec un ou plusieurs étages d'épaisseurs décroissantes et dont l'extrémité constitue une petite languette terminale (8-8') qui, s'encastrant dans les rainures usinées dans l'autre élément (B) de l'assemblage permet la solidarisation des éléments de structure - (1-2-3-4, figure 1 et 2) et de la pièce de jonction - (5) grâce au fait que l'épaisseur (I) de l'extrémité de la petite languette (8-8') de la pièce (A) est légèrement supérieure à la largeur (I') du fond de la rainure de la pièce (B) et que la distance (L') entre les lèvres des bords de la grosse rainure de la pièce B est légèrement inférieur à l'épaisseur - (L) de la partie correspondante de la grosse languette de la pièce (A), et au fait que la profondeur - (a' + b', figure 3) de l'ensemble des rainures est sensiblement égale à la longueur (a + b) de l'ensemble des languettes ainsi qu'au fait que les joues des languettes et des rainures sont usinées de manière à avoir des angles bien déterminés (respectivement $\alpha$, $\beta$ et $\alpha'$, $\beta'$) entre les plans - (7,7') et (8,8') des joues des languettes et les plans (9,9') et (10,10') des joues des rainures par rapport au plan médian de l'emboitement (X,X' figure 3)

2-Système de fixation et de solidarisation selon la revendication 1, caractérisé en ce que les dimensionnements de la grosse languette et de la petite languette de l'élément (A'-figure 3) de l'assemblage ainsi que les différentes parties de la rainure de l'élément (B) sont tels que, compte tenu de l'élasticité des matériaux employés, l'emboitement des éléments de structure dans les pièces de jonction soit aisé tout en assurant un serrage satisfaisant après encastrement, ce qui garantit la bonne solidarisation des traverses et des pièces de jonction.

3-Système de fixation et de solidarisation selon les revendications 1 et 2 caractérisé par le fait que, lors de l'usinage, les angles entre le plan médian de l'emboitement et les plans des joues de la grosse languette peuvent varier de 0 à 20 degrés et préférentiellement de 1 à 3 degrés, que les angles entre le plan médian de l'emboitement et les plans des joues de la grosse rainure peuvent varier de 0 à 20 degrés et préférentiellement de 0 à 3 degrés, que les angles entre le plan médian de l'emboitement et les plans des joues de la petite languette peuvent varier de 0 à 20 degrés et préférentiellement de 0 à 3 degrés, et que les angles entre le plan médian de l'emboitement et les plans des joues de la petite rainure peuvent varier de 0 à 20 degrés et préférentiellement de 1 à 3 degrés.

4-Système de fixation et de solidarisation suivant les revendications 1,2 et 3, caractérisé en ce que la grosse languette de l'extrémité usinée des éléments (A-figure 3) de l'assemblage comporte un ou plusieurs étages de section décroissante et que les rainures de la pièce B sont usinées pour épouser les formes des diverses languettes de la pièce A.

5-Système de fixation et de solidarisation suivant les revendications 1,2,3 et 4, caractérisé en ce que l'extrémité de la languette terminale de la pièce A figure 3 et 4 comporte une ou plusieurs languettes (figures 5A et 5B) de formes variables et que les rainures de la pièce B sont usinées pour épouser les formes de ces languettes.

6-Système de fixation et de solidarisation selon les revendications 1,2,3,4 et 5 caractérisé en ce que les éléments de structure et les pièces de jonction, réalisées préférentiellement en bois, peuvent également l'être en métal, matières plastiques... mais que pour un matériau déterminé des éléments de structure, le choix de la nature du matériau constitutif des pièces de jonction est fonction des caractéristiques mécaniques et notamment de l'élasticité de ce matériau, de manière à permettre la bonne solidarisation entre les éléments de structure et la pièce de jonction.

7-Système de fixation et de solidarisation suivant les revendications 1,2,3,4,5 et 6 caractérisé en ce que les pièces de jonction peuvent comporter un nombre variable de rainures ou d'ailes, suivant le mode de réalisation de l'invention choisi, dont les plans médians font entre eux des angles déterminés en fonction des utilisations envisagées (Figure 7 et 8)

9-Système de fixation et de solidarisation suivant les revendications 1,2,3,4,5 et 6 caractérisé en ce que les ailes ou les rainures profilées des pièces de jonction et les rainures ou les ailes des éléments de structure sont interrompues aux extrémités et qu'ainsi, rainures et languettes n'apparaissent pas à la vue après montage (Figure 12).

9-Système de fixation et de solidarisation suivant les revendications 1,2,3,4,5,6 et 7 caractérisé en ce que les pièces de jonction peuvent comporter simultanément des ailes profilées et des rainures ayant des formes variables mais dont l'une au moins est conforme à la présente invention et que les embouts des éléments de structure se raccordant à ces pièces de jonction sont usinés pour s'emboiter dans l'aile profilée ou la rainure correspondante.

10-Système de fixation et de solidarisation suivant les revendications 1,2,3,4,5,6,8 et 9 caractérisé en ce que l'une au moins des rainures et/ou des ailes des pièces de jonction est réalisée conformément à la présente invention mais que les autres rainures et/ou ailes peuvent avoir des formes variables, permettant par exemple l'utilisation de matériaux autres que le bois, métal ou matière plastique pour la réalisation des éléments de structure (Figure 11).

11-Système de fixation et de solidarisation suivant les revendications 1,2,3,4,5,6,7,9 et 10 caractérisé, si les pièces de jonction comportent des rainures non utilisées lors des montages, par la mise en place de cache rainures de forme appropriée (Figure 13) dans les rainures non occupées par les extrémités des éléments de structure.

-12 Système de fixation et de solidarisation suivant les revendications 1,2,3,4,5,6,7,9 et 10 caractérisé en ce qu'il est possible d'utiliser soit une pièce de jonction, soit plusieurs pièces de jonction échelonnées sur la longueur des embouts des éléments de structure et qu'inversement plusieurs éléments de structure peuvent être encastrés dans la même rainure ou la même aile d'une pièce de jonction (Figure 9)

-13 Système de fixation et de solidarisation selon les revendications 1,2,3,4,5,6,7,8,9,10 caractérisé en ce que les pièces de jonction ou les éléments de structure peuvent comporter des usinages complémentaires tels que encoches permettant par exemple la mise en place de panneaux de fond, trous pour la fixation de portes, caches...- (figure 10)

*Figure 1*

*Figure 2*

# Figure 3

# Figure 4

# Figures 5

5A

5C

5B

5D

## Figures 6

## Figures 7

Figures 8

$Y_1$

$Y_2$

$Y_3$

Figure 9

J2

J1

E

E'

F

Figure 10

Figure 11

Figure 12

E

E

Figure 13

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-C-1 237 762   (HOFMANN) <br> * figure 1 * | 1,2,4 | F 16 B   12/24 |
| X | DE-U-8 138 366   (OLESEN) <br> * figure 6 * | 1,2,4 | |
| X | FR-A-1 064 660   (FOURNIER) <br> * figure 1d * | 1,2,4 | |
| X | GB-A-1 338 573   (DAVID GRAY (CONTRACTORS))) <br> * figure 2 * | 1,2,4 | |
| Y | DE-B-1 239 527   (BERNARD) <br> * figure 2 * | 1,2 | DOMAINES TECHNIQUES RECHERCHES (Int. Cl.4) |
| Y | FR-A-2 512 133   (HADDAD-PREVOST) <br> * figures 3-6 * | 1,2 | F 16 B   12/00 <br> B 27 F    1/00 |
| Y | US-A-3 692 340   (ROTH) <br> * figure 2 * | 1,2 | |
| Y | US-A-4 261 148   (SCOTT) <br> * figure 6 * | 1,2 | |

Le présent rapport de recherche a été établi pour toutes les revendications

| Lieu de la recherche <br> BERLIN | Date d'achèvement de la recherche <br> 25-06-1986 | Examinateur <br> ZAPP E |
|---|---|---|